# EUROPÄISCHE PATENTSCHRIFT

(11) **EP 0 769 918 B1**
(45) Veröffentlichungstag und Bekanntmachung des Hinweises auf die Patenterteilung: **30.09.1998**
(21) Anmeldenummer: 95924980.6
(22) Anmeldetag: 06.07.1995
(51) Int. Cl.: A23L 3/3418, A23L 3/3445, A23L 3/3427, A23B 7/148, A23B 7/152

(54) **VERFAHREN ZUR EINSTELLUNG EINER KONTROLLIERTEN ATMOSPHÄRE IN EINEM BEHÄLTER**
METHOD OF CREATING A CONTROLLED ATMOSPHERE IN A CONTAINER
PROCEDE DE CREATION D'UNE ATMOSPHERE CONTROLEE DANS UN CONTENEUR

(30) Priorität: 08.07.1994 DE 4424170
(43) Veröffentlichungstag der Anmeldung: 02.05.1997
(73) Patentinhaber: CarboTech-Anlagenbau GmbH, 45307 Essen (DE)
(72) Erfinder: SCHULTE-SCHULZE-BERNDT, Alfons, Bernhard, D-48455 Bad Bentheim (DE); KOOIJMAN, Peter, Anton, Cornelis, NL-2954 BM Alblasserdam (NL)
(74) Vertreter: Schumacher, Horst, Dr. Dipl.-Phys.
(86) Internationale Anmeldenummer: EP9502625
(87) Internationale Veröffentlichungsnummer: WO9601573

(56) Entgegenhaltungen:
- EP-A- 0 114 912
- EP-A- 0 120 271
- EP-A- 0 147 277
- EP-A- 0 160 325
- EP-A- 0 380 723
- EP-A- 0 467 668
- EP-A- 0 565 827
- EP-A- 0 651 946
- WO-A-95/05753
- DE-A- 1 922 997
- GB-A- 2 195 097
- US-A- 3 981 698
- US-A- 4 961 322
- US-A- 5 108 467

## Beschreibung

Die Erfindung betrifft ein verfahren zur Einstellung einer kontrollierten Atmosphäre in einem Behälter gemäß dem Oberbegriff des Anspruchs 1 sowie eine Vorrichtung zur Durchführung des Verfahrens.

Aus "Schiff & Hafen/SEEWIRTSCHAFT", Heft 4/1992, Seite 41 bis 46, sind Behälter mit kontrollierter Atmosphäre für den Transport oder die Aufbewahrung von verderblichen Gütern bekannt. Dabei wird die kontrollierte Atmosphäre mit einem Stickstofferzeuger und einer separaten CO₂-Entfernungseinheit eingestellt und gesteuert.

Bei diesem Verfahren ist es von Nachteil, daß zwei getrennte Anlagen zur Stickstofferzeugung und zur CO₂-Entfernung benötigt werden, wobei beide Anlagen mit eigener Steuerung und Schaltventilen ausgestattet und eine übergeordnete Steuerung zusätzlich eingesetzt werden muß.

Aus der EP 0 565 291 A1 und der EP 0 467 668 A1 ist es bekannt, durch eine Serienschaltung von Adsorberschichten aus Gasatmosphäre unter anderem Kohlendioxid und Sauerstoff herauszufiltern, um diese kontrollierte Atmosphäre in Lagerbehälter einzuführen. Zur Entfernung dieser Gase ist jedoch jeweils ein eigener Adsorber bzw. eine Adsorptionsanlage erforderlich.

Aus der EP 0 120 271 B1 ist ein Verfahren zur Erzeugung einer mit Stickstoff angereicherten Atmosphäre mit Hilfe einer Druckwechseladsorptionsanlage in einem Behälter für den Transport oder die Aufbewahrung von verderblichen Gütern bekannt, bei dem ein mit Kohlenstoffmolekularsieb gefüllter Adsorber eine mit Stickstoff angereicherte Atmosphäre mit einem Druckwechseladsorptionsprozeß erzeugt.

Der Erfindung liegt die Aufgabe zugrunde, ein Verfahren und eine Vorrichtung zur Einstellung einer kontrollierten Atmosphäre in einem Behälter für den Transport oder die stationäre Aufbewahrung von verderblichen Gütern bereitzustellen, bei der der Anlagen-, Steuerungs- und Regelungsaufwand sowie die Investitionskosten erniedrigt werden.

Diese Aufgabe wird durch die kennzeichnenden Merkmale des Anspruchs 1 gelöst.

Weiterbildungen sind in den Unteransprüchen aufgeführt.

Gemäß der Erfindung werden die zuvor in getrennten Anlagen durchgeführten Verfahren in einer Anlage ausgeführt. Diese Anlage besteht aus einem mit Kohlenstoffmolekularsieb gefüllten Adsorber, der über Rohrleitungen und Ventile mit einem Gebläse und einer Vakuumpumpe mit dem Behälter verbunden ist. Die Anlage wird über eine Steuerung gesteuert.

Bei Anwendungsfällen, bei denen in der Umgebungsluft und/oder in der Behälteratmosphäre ein hoher Feuchtigkeitsgehalt vorhanden ist, sollte vor der Kohlenstoffmolekularsiebschicht eine Trocknungsmittelschicht vorgesehen sein. Als Trocknungsmittel sind sowohl handelsübliche anorganische Trocknungsmittel, als auch Aktivkohle geeignet.

Zur Erzeugung von Stickstoff wird Umgebungsluft vom Gebläse angesaugt und über die Adsorptionsmittelschüttung bei leichtem Überdruck geleitet. Die Vakuumpumpe ist außer Funktion. Die Adsorptionsmittelschüttung adsorbiert bevorzugt Sauerstoff. Stickstoffreichgas verläßt den Adsorber und wird in den Behälter geleitet zur Absenkung des Sauerstoffgehaltes über den Vermischungseffekt mit Stickstoffreichgas. Nach einer Adsorptionszeit von 30 bis 120 s, vorzugsweise 60 s, wird das Gebläse deaktiviert und die Vakuumpumpe in Betrieb gesetzt. Das durch die Vakuumpumpe erzeugte Vakuum dient zur Regeneration der sauerstoffbeladenen Adsorptionsmittelschüttung. Die Regenerationszeit liegt bei 30 bis 120 s, vorzugsweise 60 s. Nach Abschluß der Regenerationsphase erfolgt wiederum eine Adsorptionsphase wie zuvor beschrieben.

Die Stickstoffproduktion wird solange fortgesetzt, bis im Behälter der notwendige Sauerstoffgehalt erreicht ist. Sauerstoff und CO₂-Gehalt der Behälteratmosphäre werden kontinuierlich über eine Analysenstation ermittelt.

Zu Erniedrigung des CO₂-Gehaltes in dem Behälter wird anschließend die gleiche Vorrichtung benutzt, um ein CO₂-armes Gas zu erzeugen. Dabei wird vom Gebläse Behältergas angesaugt und über die Adsorptionsmittelschüttung des Adsorbers geleitet. Das Kohlenstoffmolekularsieb adsorbiert nun bevorzugt CO₂ und produziert CO₂-armes Gas, das anschließend in den Behälter zurückgeleitet wird. Die anfängliche Ko-Adsorption von Sauerstoff ist nach ca. 30 bis 120 s Adsorptionszeit beendet, da bezüglich Sauerstoff die Kohlenstoffmolekularsiebschüttung sich nahezu im Bereich der Sättigung befindet. Als vorteilhaft erweist sich dabei weiterhin, daß neben dem CO₂ ebenso Ethylen adsorbiert wird. Ethylen ist neben CO₂ ein weiteres Gas, welches während des Lagerprozesses gebildet wird und einen ähnlich schädlichen Charakter für die Langzeitlagerung von Früchten darstellt wie das CO₂. Der Ethylengehalt (50 - 500 ppm) ist jedoch um ein vielfaches geringer als der CO₂-Gehalt (2 - 8 %). Da die Ethylenadsorption an Kohlenstoffmolekularsieben deutlich höher ist als die CO₂-Adsorption, wird automatisch der Ethylengehalt des produzierten CO₂-armen Gases sehr niedrig sein.

Die Adsorptionszeit im CO₂-Zyklus liegt zwischen 0,5 und 15 min, vorzugsweise 1 bis 2 min. Aufgrund der oben erwähnten Ko-Adsorption von Sauerstoff, ist es mit den vorzugsweise genannten Zykluszeiten möglich, neben dem CO₂ auch Sauerstoff zu entfernen.

Die Regeneration erfolgt durch umschaltung von Gebläsebetrieb auf Vakuumbetrieb. Die Vakuumpumpe saugt das zuvor adsorbierte CO₂ und ggf. Sauerstoff und Ethylen aus der Schüttung. Die Rohrleitung zum Gebläse bzw. zum Behälter sind dabei durch geschlossene Ventile abgeschlossen. Durch eine geringe Frischluftmenge, welche über ein Drosselventil dem Adsorber von außen zugeführt wird, erfolgt eine Unterstützung der Regeneration. Die Regenerationszeit des CO₂-Zyklus liegt zwischen 0,5 und 5 min, vorzugsweise 1 bis 2 min. Im Anschluß an die Regenerationsphase erfolgt wiederum eine Adsorptionsphase zur Produktion von CO₂-armen, ggf. Sauerstoff- und Ethylenarmen Gas.

Die Steuerung der Anlage gibt vor, welcher Zyklus (Stickstoffzyklus oder CO₂-Zyklus) gefahren werden soll. Entscheidend sind die von der Analysenstation vorgegebenen Sollwerte für Sauerstoff und CO₂. Befinden sich beide Werte im Sollbereich, wird die Anlage auf einen Stand-by-Modus geschaltet.

Ist der Sauerstoff-Wert oberhalb des Soll-Wertes, wird der Stickstoff-Zyklus aktiviert, um Stickstoff zu produzieren. Ist der CO₂-Wert oberhalb des Soll-Wertes wird der CO₂-Zyklus aktiviert. Nach Erreichen des CO₂-Sollwertes wird, falls notwendig, anschließend der N₂-Zyklus aktiviert.

Sollte sich ein Sauerstoff-Wert unterhalb des Soll-Wertes einstellen, wird ebenfalls der Stickstoff-Zyklus aktiviert, jedoch diesmal mit wesentlich längeren Adsorptionszeiten. Die Kohlenstoffmolekularsiebschüttung ist hierbei bereits nach 30 bis 120 s mit Sauerstoff abgesättigt, so daß kein weiterer Sauerstoffanteil adsorbiert wird. Nach Überschreiten dieser 30 bis 120 s wird dann automatisch Gas mit einem hohen Sauerstoffanteil in den Behälter geleitet. Dies wird solange fortgesetzt, bis der Soll-Wert für Sauerstoff wieder erreicht ist.

Gemäß einer Weiterbildung der Erfindung wird anstelle eines separaten Gebläses und einer separaten Vakuumpumpe nur eine Vakuumpumpe eingesetzt, welche gleichzeitig auch als Gebläse verwendet wird. Dadurch reduzieren sich die Investitionskosten.

Gemäß einer weiteren Weiterbildung der Erfindung wird anstelle eines Adsorbers zwei wechselseitig betriebene Adsorber eingesetzt. Dadurch wird eine hohe Ausnutzung des Gebläses und der Vakuumpumpe erreicht. Diese Zwei-Adsorber-Ausführung wird bevorzugt bei der stationären Aufbewahrung (Lagerräume) eingesetzt, da es sich hier häufig um sehr große Behältervolumen handelt und aufgrund der Dimensionen eine hohe Ausnutzung des Gebläses und der Vakuumpumpe besonders vorteilhaft im Hinblick auf die Investitionskosten ist. Diese Zwei-Adsorber-Anlage wird sowohl für das StickstoffErzeugungsverfahren als auch für das CO₂-Entfernungsverfahren verwendet.

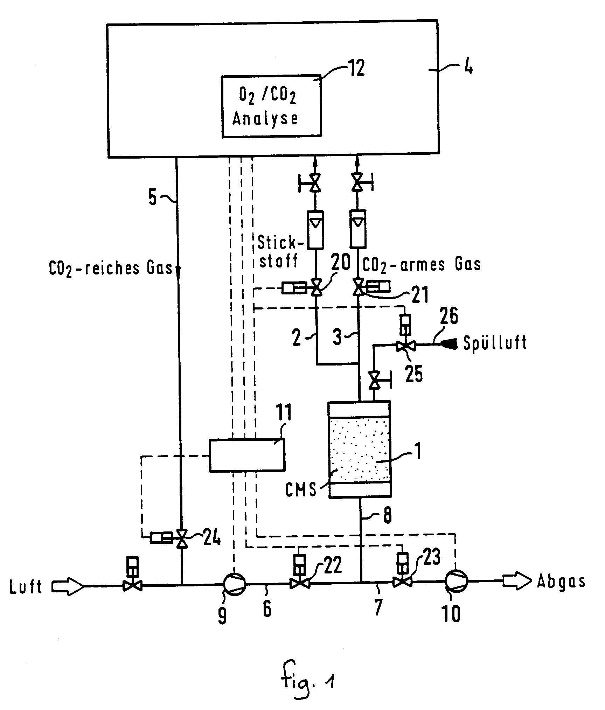

Die Erfindung wird nachfolgend anhand der Zeichnung und zwei Ausführungsbeispielen näher beschrieben.

Die einzige Figur zeigt die erfindungsgemäße Vorrichtung.

Aus der Figur geht hervor, daß ein mit Kohlenstoffmolekularsieb gefüllter Adsorber gefüllter Adsorber 1 über Leitungen 2 und 3 mit einem Behälter 4 verbunden ist. An dem Behälter 4 ist eine Leitung 5 angeschlossen, die mit einer Leitung 6 mit einem Gebläse 9 verbunden ist. Mit dem Gebläse 9 kann Luft oder über Leitung 5 CO₂-reiches Gas aus dem Behälter 4 über eine Leitung 8 in den Adsorber 1 geführt werden. Die Leitung 6 bzw. 8 ist mit einer Leitung 7 mit einer Vakuumpumpe 10 zum Abpumpen des Abgases verbunden. Die Anlage ist mit einer Steuerung 11, die mit einer Sauerstoff-/ CO₂-Analysenstation verbunden ist, steuerbar.

Die Steuerung erfolgt über Ventile 20 bis 25, die in den Leitungen 2 bis 7 angeordnet sind. Das Ventil 25 befindet sich in einer Leitung 26 zum Zuführen der Spülluft.

### Ausführungsbeispiel 1

Ein stationärer isolierter gasdichter Behälter mit Über- und Unterdrucksicherheitsventilen weist folgende Abmessungen auf:
- Länge: 3,3 m
- Breite: 2,4 m
- Höhe: 2,15 m
- Gasvolumen: 13,6 m³

In diesem Behälter wird mit folgender Anlage eine kontrollierte Atmosphäre eingestellt:
- Adsorber: 1 Stück
- Adsorbervolumen: 0,06 m³
- Kohlenstoffmolekularsieb: 0,05 m³ (35 kg) Typ CMS-F
- Gebläse: 1 Stück
Typ Roots-Gebläse
max. Lieferdruck 1,8 bar (a)
max. Liefermenge ca. 15 m³/h
- Vakuumpumpe: 1 Stück
Typ Walzkolben
max. Vakuum 10 mbar
max. Fördermenge 185 m³/h
- O₂-Analysator: 1 Stück
Typ elektro-chem. Meßzelle
Meßbereich 0,01 bis 25 Vol.-%
- CO₂-Analysator: 1 Stück
UV-Meßprinzip
Meßbereich 0,1 bis 10 Vol.-%
- Gasmengenmessung: 1 Stück
Typ Gasbalgenzähler
Meßbereich 0,1 bis 20 Nm³/h
- Steuerung: 1 Stück frei programmierbare
SPS
(Speicherprogrammierbare Steuerung)

Zu Beginn des Versuches wurde in dem Behälter eine Sauerstoffkonzentration von 20,8 Vol.-% und eine CO₂-Konzentration von 8 Vol.-% eingestellt. Die Sollwerte betragen
- Sauerstoffkonzentration: ≤ 3 Vol.-%,
- CO₂-Konzentration: ≤ 1 Vol.-%

### 1. Stickstofferzeugungsverfahren

- Zykluszeiten: 60 Sekunden Adsorption
60 Sekunden Regeneration
- Adsorptionsdruck: 1,8 bar (a)
- Vakuum: 50 mbar (a) (Endvakuum)

Die Anlage wurde mit diesen Bedingungen 12 Stunden lang betrieben. Nach 12 Stunden betrug die Sauerstoffkonzentration im Lagerraum 2,7 Vol.-% und die CO₂-Konzentration < 0,1 Vol.-%

### 2. Zur Simulation einer CO₂-Entwicklung wurde CO₂ in den Lagerraum eingeleitet.

- Menge: ca. 0,6 m³ CO₂ (100 % CO₂)

Es ergab sich eine Sauerstoffkonzentration von 2,6 Vol.-% und eine CO₂-Konzentration von 3,2 Vol.-%.

### 3. CO₂-Entfernungsverfahren

- Zykluszeiten: 10 min. Adsorption
2 min. Regeneration
- Adsorptionsdruck: 1,8 bar (a)
- Vakuum: 50 mbar (a) (Endvakuum)
Nach einer Laufzeit von 4 Zyklen ≡ 48 min betrug die Sauerstoffkonzentration 2,9 Vol.-% und die CO₂-Konzentration 1,0 Vol.-%.

### Ausführungsbeispiel 2

Der gleiche Behälter und die gleiche Anlage wie im Ausführungsbeispiel 1 wird mit einer Zwei-Adsorber-Anlage zur Einstellung der kontrollierten Atmosphäre betrieben. Die Startbedingungen und die eingestellten Sollwerte entsprechen den Werten von Ausführungsbeispiel 1. Das Adsorbervolumen beträgt 2 x 0,06 m³. Die Adsorber sind mit 0,1 m³ (70 kg) Kohlenstoffmolekularsieb vom Typ CMS-F gefüllt.

Nach einer Laufzeit von 6 Stunden stellt sich in dem Lagerraum eine Sauerstoffkonzentration von 2,8 Vol.-% und eine CO₂-Konzentration von < 0,1 Vol.-% ein, d. h., gegenüber Ausführungsbeispiel 1 erfolgt die Einstellung der Sollwerte nach der halben Laufzeit.

Es werden wieder 0,6 m³ CO₂ (100 % CO₂) in den Lagerraum zur Simulation eines höheren CO₂-Gehaltes eingeleitet. Die Sauerstoff-Konzentration beträgt 2,7 Vol.-%, die CO₂-Konzentration 3,1 Vol.-%.

Im CO₂-Entfernungsverfahren, das mit den gleichen Bedingungen wie bei Ausführungsbeispiel 1 durchgeführt wird, ergeben sich nach 4 Zyklen ≡ 48 min eine Sauerstoffkonzentration von 3 Vol.-% und eine CO₂-Konzentration von 0,6 Vol.-%. Bei gleicher Laufzeit wie in dem Ausführungsbeispiel 1 wird eine geringere CO₂-Konzentration erreicht.

### Bezugszeichenliste

- 1: Adsorber
- 2: Leitung
- 3: Leitung
- 4: Behälter
- 5: Leitung
- 6: Leitung
- 7: Leitung
- 8: Leitung
- 9: Gebläse
- 10: Vakuumpumpe
- 11: Steuerung
- 12: Sauerstoff/CO₂-Analysenstation
- 20: Ventil
- 21: Ventil
- 22: Ventil
- 23: Ventil
- 24: Ventil
- 25: Ventil
- 26: Leitung

## Patentansprüche

1. Verfahren zur Einstellung einer kontrollierten Atmosphäre in einem Behälter für den Transport oder die stationäre Aufbewahrung von verderblichen Gütern mit einem Stickstofferzeuger und einer CO₂-Entfernungseinheit, **dadurch gekennzeichnet**, daß
a) in einem Stickstofferzeugungsverfahren durch einen mit Kohlenstoffmolekularsieb gefüllten Adsorber Umgebungsluft bei leichtem Überdruck geleitet wird und das den Adsorber verlassende Stickstoffreichgas in den Behälter zur Absenkung des Sauerstoffgehaltes geführt wird und der Kohlenstoffmolekularsieb-Adsorber anschließend unter Vakuumbedingungen regeneriert wird, wobei die Stickstofferzeugung solange fortgesetzt wird, bis in dem Behälter der gewünschte Sauerstoffgehalt erreicht ist, und
b) in einem CO₂-Entfernungsverfahren Gas aus dem Behälter abgesaugt und über den gleichen Adsorber geleitet wird, um ein CO₂-armes Gas zu erzeugen, das in den Behälter zurückgeleitet wird und anschließend die Regeneration des mit CO₂ beladenen Adsorbers unter Vakuumbedingungen erfolgt.

2. Verfahren nach Anspruch 1, dadurch gekennzeichnet, daß sowohl die Umgebungsluft als auch das Behältergas durch eine Trocknungsmittelschicht geführt werden, bevor sie durch die Kohlenstoffmolekularsiebschicht geleitet werden.

3. Verfahren nach Anspruch 1 oder 2, dadurch gekennzeichnet, daß während der Stickstofferzeugungsphase die Adsorptionszeiten 30 bis 120 s, vorzugsweise 60 s, und die Regenerationszeiten zwischen 30 bis 120 s, vorzugsweise 60 s, betragen und die Adsorptionszeit bei der CO₂-Adsorption zwischen 0,5 und 15 min, vorzugsweise 1 bis 2 min, liegt und die Regenerationszeit zwischen 0,5 und 5 min, vorzugsweise 1 bis 2 min, beträgt.

4. Vorrichtung zur Durchführung des Verfahrens nach Anspruch 1, dadurch gekennzeichnet, daß ein Adsorber (1) über Leitungen (2, 3) mit einem Behälter (4) verbunden ist und über Leitungen (5, 6, 8) mit Luft bzw. CO₂-reichem Gas aus dem Behälter (4) über ein Gebläse (9) beaufschlagbar ausgebildet ist und über Leitungen (7, 8) mit einer Vakuumpumpe (10) verbunden ist und eine Steuerung (11) mit einer Sauerstoff-/CO₂-Analysestation verbunden ist.

5. Vorrichtung nach Anspruch 4, dadurch gekennzeichnet, daß die Vakuumpumpe (9) auch als Gebläse (10) verwendet wird.

6. Vorrichtung nach Anspruch 4 oder 5, dadurch gekennzeichnet, daß die Steuerung mit Ventilen (20, 21, 22, 23, 24, 25) verbunden ist, die in den Leitungen (2, 3, 6, 7, 5, 26) angeordnet sind.

7. Vorrichtung nach Anspruch 4, dadurch gekennzeichnet, daß Adsorber (1) als Zwei-Adsorber-Anlage ausgebildet ist.

## Claims

1. A process for adjusting a controlled atmosphere in a container for the transportation or stationary storage of perishable goods with a nitrogen producer and a CO₂ removal unit, characterised in that
a) in a nitrogen production process, ambient air is led with a slight excess pressure through an adsorber filled with carbon molecular sieve and the nitrogen-rich gas leaving the adsorber is passed into the container to lower the oxygen content and the carbon molecular sieve adsorber is then regenerated under vacuum conditions, nitrogen production being continued until the desired oxygen content is achieved in the container, and
b) in a CO₂ removal process, gas is drawn off from the container and led across the same adsorber in order to produce a gas low in CO₂ which is returned to the container and then regeneration of the adsorber loaded with CO₂ takes place under vacuum conditions.

2. A process in accordance with Claim 1, characterised in that both the ambient air and the container gas are passed through a layer of drying agent before they are led through the layer of carbon molecular sieve.

3. A process in accordance with Claim 1 or 2, characterised in that during the nitrogen production phase, the adsorption periods are 30 to 120 s, preferably 60 s, and the regeneration periods are between 30 to 120 s, preferably 60 s, and the adsorption period upon CO₂ adsorption lies between 0.5 and 15 min, preferably 1 to 2 min, and the regeneration period is between 0.5 and 5 min, preferably 1 to 2 min.

4. Apparatus for carrying out the process in accordance with Claim 1, characterised in that an adsorber (1) is connected to a container (4) via lines (2, 3), is constructed so as to be able to be acted upon via lines (5, 6, 8) with air or gas rich in CO₂ from the container (4) via a blower (9) and is connected to a vacuum pump (10) via lines (7, 8), and a control means (11) is connected to an oxygen/CO₂ analysis station.

5. Apparatus in accordance with Claim 4, characterised in that the vacuum pump (9) is also used as a blower (10).

6. Apparatus in accordance with Claim 4 or 5, characterised in that the control means is connected to valves (20, 21, 22, 23, 24, 25) arranged in the lines (2, 3, 6, 7, 5, 26).

7. Apparatus in accordance with Claim 4, characterised in that the adsorber (1) is in the form of a two-adsorber unit.

## Revendications

1. Procédé pour la mise en place d'une atmosphère contrôlée dans un récipient pour le transport ou la conservation stationnaire de marchandises périssables avec un producteur d'azote et une unité d'élimination de CO₂ caractérisé en ce que
a) dans un procédé de production d'azote par un adsorbeur rempli de tamis moléculaires de carbone, l'air environnant est conduit à une légère surpression et le gaz riche en azote quittant l'adsorbeur est conduit dans le récipient pour l'abaissement de la teneur en azote et l'adsorbeur à tamis moléculaires de carbone est ensuite régénéré en conditions sous vide et la production d'azote continue jusqu'à ce que dans le récipient, la teneur souhaitée en oxygène soit atteinte, et
b) dans un procédé d'élimination de CO₂, le gaz est aspiré du récipient et conduit par le même adsorbeur pour produire un gaz pauvre en CO₂ qui est ramené dans le récipient et ensuite se produit la régénération de l'adsorbeur chargé de CO₂ en conditions de vide.

2. Procédé selon la revendication 1, caractérisé en ce que, aussi bien l'air environnant qu'également le gaz du récipient sont conduits à travers une couche d'un agent siccatif avant d'être conduits à travers la couche de tamis moléculaires de carbone.

3. Procédé selon la revendication 1 ou 2, caractérisé en ce que, pendant la phase de production d'azote, les temps d'adsorption sont de 30 à 120 s, avantageusement de 60 s, et les temps de régénération sont compris entre 30 et 120 s, avantageusement 60 s, et le temps d'adsorption lors de l'adsorption de CO₂ est compris entre 0,5 et 15 min., avantageusement entre 1 et 2 min., et le temps de régénération est compris entre 0,5 et 5 min., avantageusement entre 1 et 2 min.

4. Dispositif pour la mise en oeuvre du procédé selon la revendication 1, caractérisé en ce qu'un adsorbeur (1) est relié par des conduites (2, 3) à un récipient (4) et par des conduites (5, 6, 8) avec l'air ou respectivement le gaz riche en CO₂ provenant du récipient (4) par un ventilateur (9) configuré sollicitable et relié par des conduites (7, 8) à une pompe à vide (10) et une commande (11) est liée à la station d'analyse d'oxygène/CO₂.

5. Dispositif selon la revendication 4, caractérisé en ce que la pompe à vide (9) peut également être utilisée comme ventilateur (10).

6. Dispositif selon la revendication 4 ou 5, caractérisé en ce que la commande est reliée à des soupapes (20, 21, 22, 23, 24, 25) qui sont agencées dans les conduites (2, 3, 6, 7, 5, 26).

7. Dispositif selon la revendication 4, caractérisé en ce que l'adsorbeur (1) est configuré en tant qu'une installation de deux adsorbeurs.
